## Europäisches Patentamt

## European Patent Office

## Office européen des brevets

(19)

(11) Numéro de publication: **0 196 947**
**B1**

(12)

# FASCICULE DE BREVET EUROPEEN

(45) Date de publication du fascicule du brevet:
**14.09.88**

(51) Int. Cl.⁴: **F 16 D 23/14**

(21) Numéro de dépôt: **86400495.7**

(22) Date de dépôt: **10.03.86**

(54) Butée de débrayage, notamment pour véhicule automobile.

(30) Priorité: **27.03.85 FR 8504549**

(43) Date de publication de la demande:
**08.10.86 Bulletin 86/41**

(45) Mention de la délivrance du brevet:
**14.09.88 Bulletin 88/37**

(84) Etats contractants désignés:
**DE FR GB IT**

(56) Documents cités:
**FR - A - 2 099 765**
**FR - A - 2 396 892**
**FR - A - 2 508 125**
**FR - A - 2 533 281**
**FR - A - 2 545 172**
**GB - A - 2 049 862**
**GB - A - 2 073 353**

(73) Titulaire: **VALEO, 64 Avenue de la Grande Armée,
F-75017 Paris (FR)**

(72) Inventeur: **Gay, Christian, 36, rue Labat, F-75018 Paris
(FR)**
Inventeur: **Lassiaz, Philippe, 19, rue Thiers,
F-92100 Boulogne (FR)**

(74) Mandataire: **CABINET BONNET-THIRION, 95 Boulevard
Beaumarchais, F-75003 Paris (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne d'une manière générale, les butées de débrayage, notamment pour véhicules automobiles.

Ainsi qu'on le sait, par exemple du FR-A-2 533 281, une butée de débrayage comporte, globalement, un élément de manoeuvre, par lequel elle est destinée à être soumise à un organe de commande, en pratique une fourchette de débrayage, et un élément d'attaque, qui est attelé audit élément de manoeuvre, par exemple par un capot, et par lequel elle est adaptée à agir sur le dispositif débrayeur d'un embrayage.

La présente invention concerne plus particulièrement, mais non nécessairement exclusivement, le cas des butées de débrayage autocentreuses, c'est-à-dire des butées de débrayage dans lesquelles l'élément d'attaque jouit d'une latitude de cheminement par rapport à l'élément de manoeuvre perpendiculairement à l'axe de l'ensemble.

L'un des problèmes à résoudre dans la réalisation des butées de débrayage de ce type résulte de ce que, en service, et du fait que leur élément d'attaque est alors au contact d'un organe rotatif, à savoir le dispositif debrayeur de l'embrayage concerné, elles sont, dans leur ensemble, l'objet de sollicitations de rotation autour de leur axe.

En outre, une telle rotation de la butée de débrayage autour de son axe en service ne pourrait manquer d'en perturber l'autocentrage, notamment lorsqu'il s'agit d'un autocentrage maintenu, c'est-à-dire lorsque, entre l'élément d'attaque et l'élément de manoeuvre, interviennent, axialement, des moyens de frottement tarés élastiquement.

Ainsi donc, il est souhaitable, sinon nécessaire, d'assurer en service un maintien angulaire de la butée de débrayage autour de son axe.

Pour ce faire, il a été proposé de caler angulairement cette butée de débrayage sur la fourchette de débrayage, qui, elle, est bien entendu calée en rotation autour de l'axe de la butée de débrayage du fait de son montage à pivotement sur le carter de la boîte de vitesse associée, et, lorsque la butée de débrayage comporte un capot avec lequel coopère la fourchette de débrayage, de caler angulairement sur ce capot son élément de manoeuvre.

S'agissant du calage angulaire de la butée de débrayage sur la fourchette de débrayage, il a été proposé, la fourchette de débrayage comportant en pratique deux doigts par lesquels elle est engagée sur une telle butée de débrayage pour son action sur celle-ci, de mettre en oeuvre, sur la butée de débrayage, deux facettes axiales, comunément dite facettes axiales de guidage, qui, parallèles l'une à l'autre, s'étendent globalement axialement, et qui sont ainsi aptes à cooperer chacune respectivement avec les faces latérales, tournées l'une vers l'autre, desdits doigts de la fourchette de débrayage.

De telles facettes axiales de guidage ne sont pas toujours aisées à réaliser, notamment lorsqu'elles doivent être formées sur un capot.

En outre, elles peuvent, elles-mêmes, être à l'origine de difficultés pour certains types de butées de débrayage, et, plus précisément, pour les butées de débrayage «tirées», c'est-à-dire les butées de débrayage destinées à agir en traction sur ledit dispositif débrayeur de l'embrayage à commander.

En effet, une telle action en traction implique, d'une part, que l'élément d'attaque de la butée de débrayage soit engagé derrière le dispositif débrayeur de l'embrayage à commander, ou soit en prise avec une quelconque pièce, pièce d'accostage par exemple, elle-même engagée derrière ce dispositif débrayeur, et d'autre part, que la fourchette de débrayage soit engagée transversalement entre ce dispositif débrayeur et des facettes d'appui prévues transversalement à cet effet sur la butées de débrayage.

Or, la fourchette de débrayage et la butée de débrayage appartiennent, en pratique, à deux blocs différents, à savoir, d'une part, celui comportant le carter de la boîte de vitesse, qui porte la fourchette de débrayage, et d'autre part, celui comportant le carter du moteur correspondant, qui porte usuellement l'embrayage associé, et donc la butée de débrayage.

Au montage, c'est-à-dire lors du rapprochement axial relatif de ces deux blocs, il est nécessaire d'engager progressivement les doigts de la fourchette de débrayage derrière les facettes transversales d'appui de la butée de débrayage. Mais un démontage, c'est-à-dire une déconnexion l'un par rapport à l'autre des deux blocs en question doit être, inversement, possible pour un accès ultérieur à l'embrayage par exemple, en vue d'un changement ou d'une réfection de celui-ci.

Il faut dès lors pouvoir assurer un dégagement de la fourchette de débrayage par rapport à la butée de débrayage.

Les opérations de pivotement à appliquer à la fourchette de débrayage pour son engagement au montage, derrière les facettes transversales d'appui de la butée de débrayage, ou au démontage, pour son dégagement vis-à-vis de celle-ci, ne sont pas toujours possibles, car elles imposent de disposer d'un volume mort non négligeable, qui n'est pas toujours disponible.

Pour éviter de telles opérations de pivotement, il a été proposé d'assurer, entre la butée de débrayage et la fourchette de débrayage, un mouvement de montage du type en quart de tour, suivant lequel la butée de débrayage est pivotée autour de son axe d'un angle suffisant pour que, au démontage par exemple, ces facettes transversales d'appui échappent aux doigts de la fourchette de débrayage, et que, elles puissent dès lors être dégagées axialement par rapport à celui-ci.

Il est clair que, lorsqu'il est prévu sur la butée de débrayage des facettes axiales de guidage pour les doigts de la fourchette de débrayage, ces facettes axiales de guidage s'opposent à une telle rotation sur elle-même de la butée de débrayage autour de son axe.

S'agissant, maintenant, du calage angulaire de l'élément de manoeuvre de la butée de débrayage sur son capot lorsqu'elle comporte un tel capot, il a été proposé, notamment dans la FR-A-2 508 125, aussi bien que dans la FR-A-2 533 281 de tirer profit de pattes élastiquement déformables prévues pour leur attelage respectif entre le capot et l'élément de manoeuvre pour assurer conjointement un tel calage angulaire.

En pratique, ces pattes élastiquement déformables appartenant à l'élément de manoeuvre et coopérant avec deux ouvertures prévues à cet effet dans le capot, celle de leur portion qui coopère avec une telle ouverture est circonférentiellement complémentaire de celle-ci.

Bien que donnant satisfaction, une telle disposition présente l'inconvénient de conduire en service à une sollicitation circonférentielle non négligeable de ces pattes élastiquement déformables.

Pour qu'elles soient à même de résister à de telles sollicitations, il faut leur donner une épaisseur suffisante au détriment de leur élasticité.

La présente invention a d'une manière générale pour objet des dispositions qui, tout en permettant d'assurer de manière satisfaisante le maintien angulaire recherché pour la butée de débrayage, permettent d'éviter les inconvénients succinctement analysés ci-dessus et conduisent à d'autres avantages.

De manière plus précise, elle a tout d'abord pour objet une butée de débrayage, notamment pour véhicule automobile du genre comportant, d'une part, un élément d'attaque, par lequel elle est adaptée à agir sur le dispositif débrayeur de l'embrayage et, d'autre part, un élément de manoeuvre, par lequel elle est adaptée à être soumise à un organe de commande, en pratique une fourchette de débrayage, avec pour l'action de cet organe de commande, deux facettes transversales d'appui, cette butée de débrayage étant, suivant un premier aspect, caractérisée en ce que ces facettes transversales d'appui sont chacune formée par le fond d'une cuvette de concavité axialement dirigée vers l'élément d'attaque et apte à coopérer en emboîtement avec ledit organe de commande.

Dès lors, toute rotation en service de la butée de débrayage par rapport à la fourchette de débrayage est impossible, sans qu'il soit nécessaire de prévoir à cet effet, de quelconques facettes de guidage sur cette butée de débrayage.

En effet, pour l'un et l'autre des sens de rotation, la butée de débrayage vient en butée circonférentielle contre la fourchette de débrayage, par l'un ou l'autre des bords d'extrémité des cuvettes dont le fond forme ces facettes transversales d'appui.

Lorsqu'un montage du type en quart de tour doit être prevu pour les raisons exposés ci-dessus, entre la butée de débrayage et la fourchette de débrayage, les facettes transversales d'appui peuvent, de manière usuelle, appartenir à des pattes prévues radialement à cet effet sur la butée de débrayage.

Seul, est alors nécessaire, au démontage, un léger pivotement de la fourchette de débrayage, pour en permettre un dégagement vis-à-vis des cuvettes prévues, suivant l'invention, sur la butée de débrayage, et ainsi permettre la rotation sur elle-même de cette butée de débrayage autour de son axe, nécessaire alors.

Mais, lorsque, le volume nécessaire étant disponible, il est possible d'imprimer, au montage et au démontage, un mouvement de pivotement important à la fourchette de débrayage, les deux facettes transversales d'appui de la butée de débrayage sont, suivant un développement de l'invention, avantageusement reliées entre elle par une collerette circulairement continue, les cuvettes dont elles forment le fond résultant par exemple d'un simple enfoncement local d'une collerette.

En effet, grâce à une telle disposition, un montage en aveugle est avantageusement possible: une fois la fourchette de débrayage engagée transversalement derrière la collerette que présente ainsi la butée de débrayage, il suffit de faire tourner sur elle-même autour de son axe celle-ci jusqu'à ce que, les cuvettes que présente localement cette collerette venant en regard des extrémités, ou patins, des doigts de la fourchette de débrayage, celles-ci s'y engagent et assurent dès lors le calage angulaire recherché.

Si désiré, des moyens élastiques peuvent être prévus, pour solliciter en permanence la fourchette de débrayage vers les facettes transversales d'appui de la butée de débrayage.

Par exemple, et de préférence, ces moyens élastiques sont portés à demeure par la butée de débrayage.

Par ailleurs, lorsqu'un capot est prévu pour atteler axialement l'élément d'attaque à l'élément de manoeuvre, avec des moyens de blocage en rotation dudit élément de manoeuvre sur ledit capot, la butée de débrayage selon l'invention est encore, suivant un deuxième aspect, caractérisée en ce que lesdits moyens de blocage en rotation comportent une saillie portée par élément de manoeuvre, cette saillie étant propre à coopérer à l'emboîtement avec une déformation locale du capot.

Ainsi, lorsqu'il est prévu des pattes élastiquement déformables entre l'élément de manoeuvre et le capot, il est possible d'affranchir ces pattes élastiquement déformables entre l'élément de manoeuvre et le capot de la fonction de blocage en rotation recherché, et, donc, en amincissant leur extrémité, de les rendre avantageusement plus souples, si désiré.

En outre, un jeu circonférentiel peut être avantageusement prévu entre la portion de ces pattes élastiquement déformables par lesquelles celles-ci coopèrent avec une ouverture du capot et ladite ouverture, et ainsi, de les ménager en service.

Par exemple, lorsque, comme il est usuel, l'élément de manoeuvre, présente transversalement un flasque, la saillie prévue suivant l'invention sur cet élément de manoeuvre peut très simplement être formé par un ergot situé dans le prolongement radial dudit flasque.

De préférence, cet ergot a lui-même un prolongement axial, qui, notamment, lui confère avantageusement une rigidité convenable.

De préférence, également, l'extrémité de ce prolongement axial dudit ergot est chanfreinée et, le capot comportant une paroi latérale annulaire continue, la déformation que présente, suivant l'invention, ce capot, pour coopération avec la saillie correspondante de l'élément de manoeuvre est de préférence pratiquée, en forme de V, dans ladite paroi annulaire.

Il en résulte que l'engagement axial relatif du capot sur l'élément de manoeuvre nécessaire au montage de l'ensemble se trouve avantageusement facilité et simplifié, la saillie de l'élément de manoeuvre constituant avec la déformation du capot des moyens d'indexation entre ces éléments, et le prolongement axial, chanfreiné, de cette saillie assurant de lui-même, en coopération avec la configuration en V de ladite déformation du capot, un guidage appréciable au cours d'un tel engagement axial.

De préférence, enfin, le sommet de la déformation en V que présente ainsi localement la paroi annulaire du capot est globalement situé au droit de la zone médiane d'une des cuvettes dont le fond constitue une facette transversale d'appui pour l'ensemble.

La butée de débrayage selon l'invention présente ainsi avantageusement un plan de symétrie, en sorte qu'elle est indifférente au sens circonférentiel sur lequel les sollecitations en rotation dont elle est l'objet en service ont tendance à en provoquer une rotation sur elle-même autour de son axe.

Les caractéristiques et avantages de l'invention ressortiront d'ailleurs de la description qui va suivre, à titre d'exemple en référence aux dessins schématiques annexés sur lequels:

— la figure 1 est une vue en élévation d'une butée de débrayage suivant l'invention;

— la figure 2 est une vue de côté, suivant la flèche II de la figure 1;

— la figure 3 est une coupe axiale selon le plan III-III de la figure 1;

— la figure 4 est une vue en perspective du capot mis en oeuvre dans cette butée de débrayage;

— la figure 5 est une vue en élévation d'une variante de butée suivant l'invention;

— la figure 6 est une coupe axiale selon le plan VI-VI de la figure 5;

— la figure 7 est une vue partielle de côté suivant la flèche VII de la figure 6;

— la figure 8 est une coupe selon la ligne VIII-VIII de la figure 5;

Globalement, et tel qu'illustré sur ces figures, la butée de débrayage 10 a été représentée en traits pleins alors que les organes avec lesquels elle est destinée à coopérer y ont été schématisés en traits interrompus, notamment l'organe de guidage 11. Une butée de débrayage 10 suivant l'invention comporte, globalement, d'une part un élément d'attaque 12, par lequel elle est adaptée à agir sur le dispositif débrayeur 13 d'un embrayage, et, d'autre part, un élément de manoeuvre 14, par lequel elle est adaptée à être actionnée par un organe de commande 15.

L'élément de manoeuvre 14 comporte, axialement, un manchon 21 par lequel la butée de débrayage 10 est adaptée à être engangée à coulissement sur un quelconque support de guidage 11, par exemple la «trompette» entourant usuellement l'arbre d'entrée de la boîte de vitesse associée.

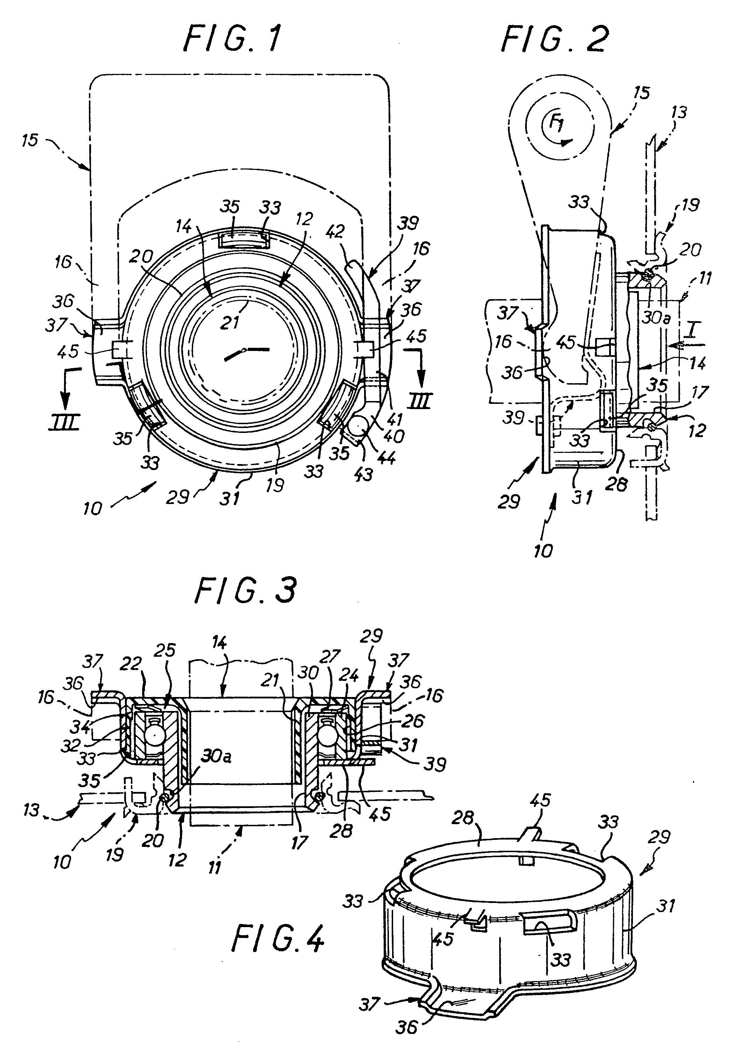

Le dispositif débrayeur 13 n'a été que partiellement représenté aux figures 2 et 3. Il peut s'agir, par exemple, de l'extrémité des doigts radiaux d'un diaphragme.

De même, l'organe de commande 15 n'a été que partiellement représenté, à la figure 1. Il s'agit en pratique d'une fourchette de commande, dont les doigts 16 sont engagés transversalement sur la butée de débrayage 10, en deux points diamétralement opposés de celle-ci.

Par exemple, et tel que représenté, la fourchette de débrayage est montée rotative sur le carter de la boîte de vitesse, autour d'un axe orthogonal à l'axe de l'organe de guidage 11. Pour action sur la butée de débrayage 10, la fourchette de débrayage 15 comporte deux doigts 16, par lesquels elle encadre cette butée de débrayage 10, et dont les extrémités sont conformées de manière à pouvoir agir sur celle-ci.

S'agissant, en pratique, d'une butée de débrayage destinée à agir en traction sur le dispositif débrayeur 13, l'élément d'attaque 12 de la butée de débrayage 10 suivant l'invention comporte un machon 17, qui, à l'une de ses extrémités, présente transversalement une pièce d'accostage 19, qui est portée à demeure par le dispositif débrayeur 13, et sur laquelle, par son élément d'attaque 12, la butée de débrayage 10 vient s'encliqueter élastiquement lors du montage de l'ensemble, un jonc élastiquement déformable 20 étant prévu à cet effet entre cette pièce d'accostage 19 et cet élément d'attaque 12.

L'élément de manoeuvre 14 comporte, transversalement, un flasque 22, solidaire du manchon 21, lui-même prolongé par un rebord axial 26.

En pratique, ce manchon 21 et ce flasque 22 sont d'un seul tenant, l'ensemble étant par exemple réalisé par montage d'une quelconque matière synthétique appropriée.

L'élément d'attaque 12 qui est logé pour l'essentiel dans le volume interne défini par l'élément de manoeuvre 14, entre son manchon 21 et son rebord axial 26, est formé, dans la forme de réalisation représentée, par un roulement à billes 25, dont la bague externe 24, sous la sollicitation d'une rondelle élastique à action axiale 27 prenant appui sur le flasque annulaire 22 de l'élément de manoeuvre 14, porte par sa tranche opposée sur le bord tombé 28 du capot 29, et dont la bague interne 30 est adaptée, par une gorge de retenue 30a, à coopérer avec le jonc élastique 20, ladite bague interne 30 faisant axialement saillie à cet effet hors du capot 29, à la faveur de l'ouverture centrale dudit bord tombé 28 de celui-ci.

En pratique, le jonc élastique 20 est adapté à coopérer avec une portée d'entraînement appartenant à la pièce d'accostage 19.

La disposition portée d'entraînement-gorge de retenue est bien connue par elle-même par exemple par la FR-A-2 545 172 et ne sera pas déscrite plus en détail ici.

Pour le maintien de l'ensemble, l'élément d'attaque 12 est attelé axialement à l'élément de manoeuvre 14 par le capot 29.

Ce capot 29 comporte une paroi latérale annulaire 31, qui s'étend axialement. Par cette paroi annulaire 31, le capot 29 est assujetti au flasque 22 de l'élément de manoeuvre 14.

Par exemple, et tel qu'illustré, des moyens d'enclipsage à pattes élastiquement déformables 32 et ouvertures 33 sont prévus à cet effet entre la paroi annulaire 31 du capot 29 et le flasque 22 de l'élément de manoeuvre 14.

Ces pattes élastiquement déformables 32 qui, par exemple, régulièrement réparties circulairement, sont au nombre de trois, appartiennent à l'élément de manoeuvre 14, et les ouvertures 33 correspondantes appartiennent au capot 29.

En pratique, les pattes élastiquement déformables 32 font saillie axialement sur le flasque 22 de l'élément de manoeuvre 14, en interrompant localement la couronne formée par le rebord axial 26 du flasque 22 et présentent, radialement en saillie vers l'extérieur, pour coopération avec l'ouverture 33 correspondante, un bourrelet 35.

Circonférentiellement, un tel bourrelet 35 est complémentaire d'une telle ouverture 33.

Un jeu axial est de préférence prévu entre le bourrelet 35 d'une patte élastiquement déformable 32 et l'ouverture 33 correspondante du capot 29.

S'agissant d'une butée de débrayage autocentreuse à autocentrage maintenu, l'élément attaque 12 dispose radialement d'une capacité omnidirectionnelle de cheminement vis-à-vis de l'élément de manoeuvre 14, dans les limites d'un jeu annulaire déterminé, ménagé a cet effet entre, d'une part, le roulement à billes 25 de cet élément d'attaque 12, et, d'autre part, la couronne 26 de cet élément de manoeuvre 14.

Pour l'action de la fourchette de débrayage 15, la butée de débrayage 10 suivant l'invention comporte, en position globalement diamétralement opposées l'une par rapport à l'autre, deux facettes transversales d'appui 36, qui, pour coopération avec les extrémités des doigts 16 de ladite fourchette de débrayage 15, s'étendent globalement radialement. Ces facettes transversales d'appui 36 appartiennent chacune à une patte 37 qui est d'un seul tenant avec le capot 29, en s'étendant transversalement, sensiblement dans le plan du flasque annulaire 22 de l'élément de manoeuvre 14.

C'est donc par l'intermédiaire du capot 29 que l'élément de manoeuvre 14 est, dans ce cas, adapté à être soumis à la fourchette de débrayage 15.

Chacune des pattes 37 que présente ainsi le capot 29 a sa partie courante légèrement déportée axialement en direction opposée à celle du bord tombé 28 par rapport à ses bords latéraux, qui, eux, sont sensiblement à ras avec l'extrémité concernée du capot 29.

Elle présente donc une cuvette formant une concavité axialement dirigée vers l'élément d'attaque 12 de la butée.

Un déplacement de la fourchette, en sens inverse de sa direction, d'appui, d'une amplitude égale à la profondeur de cette cuvette est alors suffisant pour obtenir la libération en rotation de la butée et permettre ainsi un désaccouplement de celle-ci par rapport au dispositif débrayeur de l'embrayage.

Selon une disposition particulière, une lamelle de ressort 39 est disposée globalement circonférentiellement autour de la butée de débrayage 10 qui la porte, comporte, successivement, un premier tronçon 40, par lequel elle est rapportée sur ladite butée de débrayage 10, un deuxième tronçon 41 par lequel elle s'étend globalement tangentiellement à la paroi annulaire 31 du capot 29, et un troisième tronçon 42, qui en forme l'extrémité libre.

Par son premier tronçon 40, cette lamelle de ressort 39 est rapportée par un rivet 44 sur une patte radiale 43 de la butée de débrayage 10. La patte radiale 43 est venue d'un seul tenant avec le capot 31 de la butée de débrayage 10 en continuité avec la patte 37 de celui-ci, sur laquelle est formée la facette transversale d'appui 38 concernée.

Dans la forme de réalisation représentée, le deuxième tronçon 41 de la lamelle de ressort 39 a, vu de côté, figure 2, une configuration générale en forme de S, pour appui sur une face transversale d'un doigt 16 de la fourchette de débrayage 15.

Au montage, la butée de débrayage 10 est mise en place sur son guide 11, qui est porté per le carter de la boîte de vitesses, et par ses doigts 16, la fourchette de débrayage 15 est engagée sur elle, chacun de ces doigts 16 venant s'insérer dans la cuvette ménagée sur la facette d'appui 36 correspondante avec, en sus, pour l'un d'eux, un engagement sous le tronçon médian 41 de la lamelle de ressort 39.

Le bloc, qui porte la boîte de vitesse, équipé ainsi de la butée de débrayage 10 et de la fourchette de débrayage 15, est rapproché du bloc moteur portant l'embrayage à commander. Pour atteler la butée de débrayage 10 au dispositif débrayeur 13 de ce dernier, il suffit d'assurer un déplacement axial correspondant de cette butée de débrayage 10 en direction de ce dispositif débrayeur 13, en agissant en conséquence sur la fourchette de débrayage 15, par pivotement de celle-ci autour de son axe suivant la flèche F1 de la figure 2.

En effet, agissant sur des languettes 45 prévues à cet effet sur le capot 29 de la butée de débrayage 10, la fourchette de débrayage 15 provoque alors l'encliquetage de l'élément d'attaque 12 de cette butée de débrayage 10 sur la pièce d'accostage 19 portée par le dispositif débrayeur 13.

Les facettes d'appui 36 munies de leurs cuvettes, l'une de ces facettes étant associée à la lamelle de ressort 41, consituent des moyens de maintien propres à s'opposer à une rotation de la butée de débrayage 10 autour de son axe en service.

Mais le moyen élastique de rappel constitué par ce ressort pourrait, tout aussi bien être disposé en un autre endroit tout en conservant son rôle qui est de solliciter en permanence l'organe de commande 15 vers les facettes transversales d'appui.

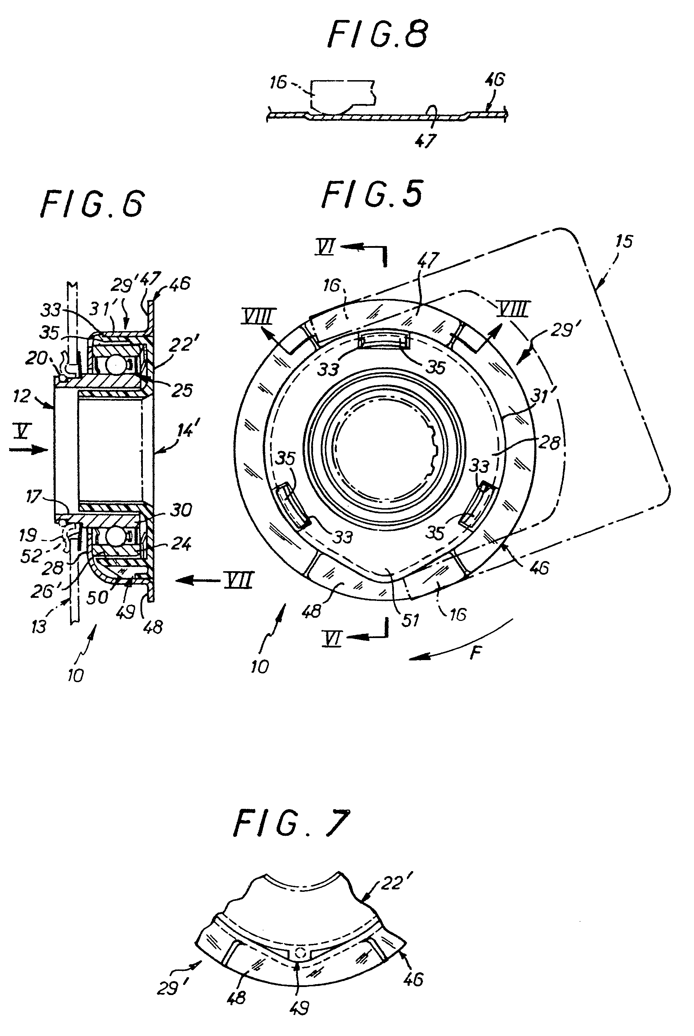

La forme de réalisation des figures 5 à 8 illustre des autres développements de l'invention.

A la différence de la précédente réalisation, la pièce d'accostage 19 n'est plus portée à demeure par le dispositif débrayeur 13, mais la pièce d'accostage 19 est en appui axial sur la bague 30 par le jonc 20, une rondelle Belleville 52 étant en appui contre un épaulement de ladite bague 30 pour maintien par pincement du dispositif débrayeur entre ladite rondelle 52 et ladite pièce d'accostage 19.

Selon un premier aspect de la présente réalisation, le capot 29' diffère ici du capot 29 de la précédente forme de réalisation par le fait de présenter, à sa périphérie, une collerette continue 46, deux enfoncements 47, 48, ménagés à des emplacements diamétralement opposés dans cette collerette remplaçant les facettes d'appui 36 formées sur les pattes 37 des figures 1 à 4.

Une telle forme de réalisation est de nature à conférer au capot une structure plus favorable du point de vue mécanique et conditions de fabrication en raison de la continuité du rebord périphérique constitué par la collerette 46. Mais, en raison même de cette continuité, on perd ainsi la possibilité d'échappement axial de la butée d'entre les doigts de la fourchette avec un pivotement de faible amplitude de la fourchette 15: tant au montage et au démontage il faut pouvoir disposer dans ce cas du volume nécessaire pour une amplitude de pivotement suffisant pour dégager le passage de l'ensemble de la collerette.

Cependant, si cette condition peut être satisfaite, on obtient en revanche, l'avantage de rendre possible un montage en aveugle: une fois la fourchette engagée derrière la collerette 46, il suffit de faire tourner celle-ci sur elle-même autour de son axe jusqu'au moment où les extrémités des doigts 16 se placent dans les enfoncements localisés 47, 48, le calage angulaire de la butée se trouve dès lors assuré.

Selon un autre aspect, on trouve dans cette forme de réalisation, un moyen perfectionné de blocage en rotation du capot 29' par rapport à l'élément de manoeuvre 14': le flasque 22' de celui-ci présente une saillie périphérique en forme d'ergot 49 avec un prolongement axial 50 se raccordant par un chanfrein, à l'extrémité libre du rebord axial 26'.

De son côté, la jupe 31' du capot présente une déformation 51 de forme générale en V adaptée à coopérer avec l'ergot précité. Grâce au calage angulaire ainsi réalisé entre capot 29' et organe de manoeuvre 14', les pattes 32 élastiquement déformables se trouvent déchargées de cette fonction de calage angulaire et n'ont plus à assurer que la seule solidarisation en sens axial entre capot et organe de manoeuvre. Ceci permet d'une part, d'alléger les pattes 32 et d'autre part, de ménager entre les parties terminales 35 de celles-ci et les fenêtres 33 destinées à les recevoir un jeu relativement important en sens circonférentiel, ce qui facilite les opérations de montage.

C'est donc la saillie radiale constituée par l'ergot 49 qui constitue avec la déformation 51 du capot le moyen d'indexation entre ces éléments assurant un guidage relatif au cours d'un engagement axial de ceux-ci.

Ainsi qu'il est visible sur la figur 5, le sommet de la déformation 51 se situe au droit de la zone médiane de la cuvette 48 dont le fond constitue une facette d'appui pour un doigt 16 de la fourchette de débrayage 15. La zone d'appui effectivement utilisée se situe dans le cas illustré entre la déformation 51 et celui des bords de la cuvette qui se trouve en amont par rapport au sens de rotation indiqué par la flèche F. Etant donné que la structure considerée présente un plan de symétrie correspondant, sur la figure 5, au plan de coupe indiqué en VI-VI, on comprendra, qu'en cas de rotation en sens inverse, la zone d'appui effectif se placera de l'autre côté de la déformation 51. La butée est donc adaptée à resister aux sollicitations en rotation qu'elle peut subir en raison du couple de traînée du roulement, quel que le sens de rotation du moteur auquel il pourra être associé.

Le système d'indexation que l'on vient de décrire en référence aux figures 5 à 8 est naturellement également susceptible de se combiner avec des facettes d'appui réalisées conformément aux figures 1 à 4 sur des pattes radialement saillantes sur le pourtour du capot de la butée.

Par ailleurs, il demeure naturellement possible de prévoir la mise en œuvre, en positions diamétralement opposées, de deux lamelles de ressort 39 pour action simultanée sur les deux doigts de la fourchette de débrayage.

## Revendications

1. Butée de débrayage, notamment pour véhicule automobile, du genre comportant, d'une part, un élément d'attaque (12), par lequel elle est adaptée à agir sur le dispositif débrayeur d'un ebrayage et, d'autre part, un élément de manœuvre (14), l'élément d'attaque étant attelé à l'élément de manœuvre par un capot (29), par lequel la butée de débrayage est adaptée à être soumise à un organe de commande (15), en pratique une fourchette de débrayage, avec, pour l'action de cet organe de commande, deux facettes transversales d'appui (36) qui sont d'un seul tenant avec le capot, caractérisée en ce que les facettes transversales d'appui (36) sont chacune formées par le fond d'une cuvette de concavité axialement dirigée vers l'élément d'attaque (12) de la butée (10) et apte à coopérer en emboîtement avec ledit organe de commande (15) pour maintien en rotation de la butée autour de son axe.

2. Butée de débrayage selon la revendication 1, caractérisée en ce qu'elle comporte des moyens élastiques (33) qui sollicitent en permanence l'organe de commande (15) vers les facettes transversales d'appui (37).

3. Butée de débrayage selon la revendication 2, caractérisée en ce que ces moyens élastiques sont portés par la butée (10).

4. Butée de débrayage selon la revendication 3, caractérisée en ce que les moyens élastiques (39) sont portés par une patte radiale (43) de la butée de débrayage.

5. Butée de débrayage selon la revendication 4, caractérisée en ce que le moyen élastique (39) consiste en une lamelle de ressort rapportée par un rivet (44) sur ladite patte radiale (43).

6. Butée de débrayage selon la revendication 3, 4 ou 5, caractérisée en ce que le moyen élastique est une lame ressort (39) ayant une configuration générale en forme de S.

7. Butée de débrayage selon l'une quelconque des revendications 1 à 6, caractérisée en ce que les deux facettes transversales d'appui (36) sont reliées entre elles par une collerette circulairement continue (46).

8. Butée de débrayage selon l'une des revendications 1 à 7, caractérisée en ce que le capot (29) est prévu pour atteler axialement l'élément d'attaque (12) et l'élément de manœuvre (14) avec des moyens de blocage en rotation de l'élément de manœuvre (14) sur le capot (29), lesdits moyens de blocage en rotation comportent une saillie (49) portée par l'élément de manœuvre, cette saillie étant propre à coopérer en emboîtement avec une déformation locale (51) du capot (29).

9. Butée de débrayage selon la revendication 8, caractérisée en ce que le capot (29) comportant une paroi latérale annulaire (31) qui s'étend axialement, la déformation locale (51) du capot (29) est pratiquée dans cette paroi annulaire (31) et a une forme en V.

10. Butée de débrayage selon l'une quelconque des revendications 8 ou 9, caractérisée en ce que l'élément de manœuvre (14) comportant transversalement un flasque (22), la saillie est un ergot (49) situé dans le prolongement radial du flasque (22) de l'élément de manœuvre (14).

11. Butée de débrayage selon la revendication 10 carctérisée en ce que l'ergot (49) a un prolongement axial (50).

12. Butée de débrayage selon la revendication 11, caractérisée en ce que l'extrémité du prolongement axial de l'ergot est chanfreinée.

13. Butée de débrayage selon la revendication 9, caractérisée en ce que le sommet de la déformation en V est globalement situé au milieu de l'une des facettes transversales d'appui (37).

14. Butée de débrayage selon l'une quelconque des revendications 1 à 13, caractérisée en ce qu'un capot (29) étant prévu pour atteler axialement l'élément d'attaque (12) à l'élément de manœuvre (14), les facettes transversales d'appui (36) sont d'un seul tenant avec ledit capot (29).

15. Butée de débrayage selon la revendication 14, caractérisée en ce que les facettes transversales d'appui appartiennent chacune à une patte (37) qui est d'un seul tenant avec le capot (29) en s'étendant transversalement sensiblement dans le plan du flasque annulaire (22) de l'élément de manœuvre (14).

16. Butée de débrayage selon la revendication 14, caractérisée en ce que le capot (29) présente à sa périphérie une collerette (46), les facettes d'appui étant constituées par deux enfoncements (47, 48) ménagés à des emplacements diamétralement opposés dans cette collerette.

17. Butée de débrayage selon l'une quelconque des revendications 9 à 16, caractérisée par une symétrie de sa structure par rapport à un plan diamétral passant par le sommet de la déformation en V, les facettes transversales d'appui présentant chacune une zone d'appui de part et d'autre de ce plan.

**Claims**

1. A clutch release bearing, particulary for an automobile vehicle, of the kind comprising, on the one hand, a drive member (12) through which it is adapted to act on the clutch release device of a clutch and, on the other hand, an operating member (14), the drive member being attached to the operating member by a cover (29) and the clutch release bearing being adapted to be controlled trought the operating member by a control member (15), in practice a clutch release fork, the operating member having, for the action of this control member, two transverse bearing facets (36) in one piece with the cover, characterized in that the transverse bearing facets (36) are each formed by the bottom of a recess the concavity of which is directed axially towards the drive member (12) of the clutch (10) and are adapted to interlock with the said control member (15) to prevent rotation of the clutch release bearing about its axis.

2. A clutch release bearing according to Claim 1, characterized in that it comprises elastic means (39) which continuously drive the control member (15) towards the transverse bearing facets (37).

3. A clutch release bearing according to Claim 2, characterized in that the elastic means are carried by the clutch release bearing (10).

4. A clutch release bearing according to Claim 3, characterized in that the elastic means (39) are carried by a radial lug (43) of the clutch release bearing.

5. A clutch release bearing according to Claim 4, characterized in that the elastic means (39) consist of a leaf spring fastened by a rivet (44) to the said radial lug (43).

6. A clutch release bearing according to any one of Claims 3, 4 or 5, characterized in that the elastic means (39) comprise a generally S-shaped leaf spring.

7. A clutch release bearing according to any one of Claims 1 to 6, characterized in that the two transverse bearing facets (36) are linked by a circumferentially continuous flange (46).

8. A clutch release bearing according to any one of Claims 1 to 7, characterized in that the cover (29) is provided to couple the drive member (12) axially to the operating member (14) with means for preventing rotation of the operating member (14) on the cover (29), the said means for preventing rotation comprising a projection (49) carried by the operating member, this projection being suitable to interlock with a local deformation (51) in the cover (29).

9. A clutch release bearing according to Claim 8, characterized in that the cover (29) comprises an annular lateral wall (31) extending axially, and the local deformation (51) in the cover (29) is made in this annular lateral wall (31) in the shape of a V.

10. A clutch release bearing according to any one Claims 8 or 9, characterized in that the operating member (14) comprises a transverse flange (22) and the projection is a peg (49) forming a radial extension of the flange (22) of the operating member (14).

11. A clutch release bearing according to Claim 10, characterized in that the peg (49) has an axial extension (50).

12. A clutch release bearing according to Claim 11, characterized in that the end of the axial extension of the peg is bevelled.

13. A clutch release bearing according to Claim 9, characterized in that the summit of the V-shaped deformation is located substantially at the middle of one of the transverse bearing facets (37).

14. A clutch release bearing according to any one of Claims 1 to 13, characterized in that a cover (29) is provided to couple the drive member 12 axially to the operating member (14), and the transverse bearing facets (36) are in one piece with the said cover (29).

15. A clutch release bearing according to Claim 14, characterized in that the transverse bearing facets each form part of a lug (37) which is in one piece with the cover (29) and extends transversely substantially in the plane of the annular flange (22) of the operating member (14).

16. A clutch release bearing according to Claim 14, characterized in that the cover (29) has a flange (46) at its periphery and the bearing facets comprise two depressions (47, 48) made at two diametrically opposite positions in this flange.

17. A clutch release bearing according to any one of Claims 9 to 16, characterized by a symmetrical construction relative to a diametrical plane passing through the summit of the V-shaped deformation, each of the transverse bearing facets having a bearing area on each side of the plane.

**Patentansprüche**

1. Kupplungsausrücker, insbesondere für Kraftfahrzeuge, mit einerseits einem Angriffselement (12), durch welches er in der Lage ist, auf die Ausrückvorrichtung einer Kupplung einzuwirken und andererseits einem Betätigungselment (14), an dem das Angriffselement mittels einer Kappe (29) befestigt ist, wobei der Ausrücker durch das Betätigungselement angepasst ist, einem Steuerorgan (15), praktisch eine Ausrückgabel, mit zwei für die Aktion dieses Steuerorgans vorgesehen querverlaufenden Anschlagflächen (36) unterworfen zu werden, die einstückig mit der Kappe ausgebildet sind, dadurch gekennzeichnet, dass die querverlaufenden Anschlagflächen (36) jeweils durch den Boden einer axial in Richtung des Angriffselements (12) gerichteten konkaven Schale des Ausrückers (10) gebildet werden und ausgebildet sind, durch Ineinanderschieben mit dem Steuerorgan (15) zum Halten des um seine Achse drehenden Ausrückers zusammenzuwirken.

2. Kupplungsausrücker nach Anspruch 1 dadurch gekennzeichnet, dass Federmittel (39) vorgesehen sind, welche das Steuerorgan (15) permanent in Richtung der querverlaufenden Anschlagflächen (37) drücken.

3. Kupplungsausrücker nach Anspruch 2, dadurch gekenzeichnet, dass die Federmittel von dem Ausrücker (10) getragen sind.

4. Kupplungsausrücker nach Anspruch 3, dadurch gekennzeichnet, dass die Federmittel (39) von einer radialen Lasche (43) des Kupplungsausrückers getragen sind.

5. Kupplungsausrücker nach Anspruch 4, dadurch gekennzeichnet, dass die Federmittel (39) aus einer Federlamelle bestehen, die mittels eines Niets (44) auf der radialen Lasche (43) befestigt ist.

6. Kupplungsausrücker nach Anspruch 3, 4 oder 5, dadurch gekennzeichnet, dass das Federmittel eine Blattfeder (39) ist, die eine Konfiguration allgemein in Form eines S aufweist.

7. Kupplungsausrücker nach mindestens einem der Ansprüche 1 bis 6, dadurch gekennzeichnet, dass die beiden quer verlaufenden Anschlagflächen (36) miteinander durch einen kreisförmig fortlaufenden Kragen (46) verbunden sind.

8. Kupplungsausrücker nach mindestens einem der Ansprüche 1 bis 7, dadurch gekenzeichnet, dass der Deckel (29) vorgesehen ist, das Angriffselement (12) in axialer Richtung mit dem Betätigungselement (14) zu verbinden, mit Mitteln zur Drehblockade des Betätigungselements (14) auf der Kappe (29), wobei die Mittel zur Drehblockade einen Vorsprung (49) aufweisen, der von dem Betätigungselement getragen wird und geeignet ist, mit einer lokalen Deformation (51) der Kappe (29) zusammenzuwirken, in die er eingeschoben ist.

9. Kupplungsausrücker nach Anspruch 8, dadurch gekennzeichnet, dass die Kappe (29) eine seitliche, ringförmige, sich axial erstreckende Seitenwand (31) aufweist, und die lokale Deformation (51) der Kappe (29) in dieser ringförmigen Seitenwand (31) ausgebildet ist und die Form eines V aufweist.

10. Kupplungsausrücker nach mindestens einem der Ansprüche 8 oder 9, dadurch gekennzeichnet, dass das Betätigungselement (14) in Querrichtung einen Flansch (22) aufweist und der Vorsprung eine in der radialen Verlängerung des Flansches (22) des Betätigungselements (14) angeordnete Nase (49) ist.

11. Kupplungsausrücker nach Anspruch 10, dadurch gekennzeichnet, dass die Nase (49) eine axiale Verlängerung (50) besitzt.

12. Kupplungsausrücker nach Anspruch 11, dadurch gekennzeichnet, dass das Ende der axialen Verlängerung (50) der Nase abgefast ist.

13. Kupplungsausrücker nach Anspruch 9, dadurch gekennzeichnet, dass die Spitze der V-förmigen Deformation im wesentlichen im Bereich einer der querverlaufenden Abstützflächen (37) angeordnet ist.

14. Kupplungsausrücker nach mindestens einem der Ansprüche 1 bis 13, dadurch gekennzeichnet, dass die querverlaufenden Anschlagflächen (36) einstückig mit der Kappe (29) zur axialen Verbindung des Angriffselements mit dem Betätigungselement (15) ausgebildet sind.

15. Kupplungsausrücker nach Anspruch 14, dadurch gekennzeichnet, dass die querverlaufenden Anschlagflächen jeweils einer Lasche (37) angehören, die einstückig mit der Kappe (29) ausgebildet ist und sich in Querrichtung im wesentlichen in der Ebene des ringförmigen Flanschs (22) des Betätigungselements (14) erstreckt.

16. Kupplungsausrücker nach Anspruch 14, dadurch gekennzeichnet, dass die Kappe (29) an ihrem Aussenumfang einen Kragen (46) aufweist und die Anschlagflächen von zwei Eintiefungen (47, 48) gebildet werden, die an einander diametral gegenüberliegenden Stellen dieses Kragens ausgearbeitet sind.

17. Kupplungsausrücker nach mindestens einem der Ansprüche 9 bis 16, gekennzeichnet durch eine Symmetrie des Aufbaus bezüglich einer Diametralebene, die durch die Spitze der V-förmigen Deformation hindurchführt, wobei die sich in Querrichtung erstreckenden Anschlagflächen jeweils eine Anschlagzone zu beiden Seiten dieser Ebene aufweisen.

FIG.1

FIG.2

FIG.3

FIG.4

0 196 947

FIG.8

FIG.6   FIG.5

FIG.7

11